# EUROPÄISCHE PATENTSCHRIFT

(11) **EP 2 901 076 B1**
(45) Veröffentlichungstag und Bekanntmachung des Hinweises auf die Patenterteilung: **05.02.2020**
(21) Anmeldenummer: 13770466.4
(22) Anmeldetag: 26.09.2013
(51) Int. Cl.: F21V 8/00, F21Y 101/00, F21S 41/10, F21S 41/19, F21S 41/14, F21S 41/20, F21S 41/24, F21S 45/10, F21S 45/47, F21S 41/16, F21S 45/70, F21Y 115/30

(54) **FASEROPTISCHES KONVERSIONSMODUL**
FIBER-OPTIC CONVERSION MODULE
MODULE DE CONVERSION À FIBRES OPTIQUES

(30) Priorität: 26.09.2012 DE 102012109088; 27.09.2012 US 201261706131 P
(43) Veröffentlichungstag der Anmeldung: 05.08.2015
(73) Patentinhaber: Schott AG, 55122 Mainz (DE)
(72) Erfinder: WÖLFING, Bernd, 55122 Mainz (DE); HAGEMANN, Volker, 55270 Klein-Winternheim (DE); MEINL, Jürgen, 65329 Hohenstein-Holzhausen (DE); RUSSERT, Hubertus, 65321 Heidenrod (DE); REICHERT, Thomas, 55263 Wackernheim (DE)
(74) Vertreter: Blumbach · Zinngrebe Patentanwälte PartG mbB
(86) Internationale Anmeldenummer: PCT/EP2013/070074
(87) Internationale Veröffentlichungsnummer: WO 2014/049056

(56) Entgegenhaltungen:
- WO-A1-2013/139621
- WO-A1-2013/139675
- WO-A1-2013/160456
- JP-A- 2012 059 452
- JP-A- 2012 190 555
- US-A1- 2011 279 039
- US-A1- 2012 057 364
- US-A1- 2012 106 178
- US-A1- 2012 106 188

## Beschreibung

Die Erfindung bezieht sich auf ein faseroptisches Konversionsmodul als Teil einer Beleuchtungseinrichtung zur Abgabe von Nutzlicht gemischt aus kurzwelligerem Anregungslicht und langwelligerem Konversionslicht, und insbesondere als Teil eines Scheinwerfers für ein Fahrzeug.

Aus JP 2012-59452, US 2011/0279039 und US 2012/0057364 gehen Beleuchtungseinrichtungen mit Nutzlicht gemischt aus kurzwelligerem Anregungslicht und langwelligerem Konversionslicht hervor, bei denen ein Konverter von der Rückseite mit Anregungslicht beaufschlagt wird und somit im Transmissionsbetrieb arbeitet. Es ist eine Lichtemissionseinheit vorgesehen, die ein Gehäuse mit im Querschnitt trapezförmigem Innenraum aufweist, in welchem sich der Konverter befindet. Auf einer oberseitigen Wandplatte des Gehäuses wird eine optische Faser geführt die mit mäßiger Biegung eine schräge Öffnung in das Innere des Gehäuses erreicht, um das Anregungslicht gegebenenfalls über ein Wärmeleitelement an die Rückseite des Konverters abzugeben. Anstelle von der Rückseite kann der Konverter auch von der Seite aus beaufschlagt werden. Die Lichtleitfaser kann auch als Lichtleitfaserbündel ausgebildet sein, das an den Faserenden mittels Halbleiterlaser mit Anregungslicht beaufschlagt wird.

Ein im Remissionsbetrieb arbeitender Konverter ist aus US 2012/0106188 bekannt. Der Konverter sitzt auf einem Kühlkörper und erstreckt sich längs der Achse eines Parabolspiegels in dessen Brennpunkt. Das Anregungslicht stammt von einer Reihe von Lasern, die jeweils ihr Licht in zugeordnete Fasern einkoppeln, und wird über eine Linse und einen Spiegel auf ein Fenster im Parabolspiegel gerichtet und gelangt so auf den Konverter, um als Nutzlicht abgegeben zu werden.

Eine ähnliche Beleuchtungseinrichtung mit im Remissionsbetrieb arbeitendem Konverter ist in der US 2012/0106178 dargestellt. Der Konverter befindet sich im Brennpunkt eines Parabolspiegels und erstreckt sich schräg zur Achse dieses Parabolspiegels, der ein Fenster hat, durch welches ein Laser sein Lichtstrahlenbündel auf den Konverter richtet.

Eine Licht emittierende Vorrichtung als Teil eines Scheinwerfers ist aus WO 2008/000208 A1 = DE 10 2006 029 2003 A1 bekannt und umfasst eine Anregungslichtquelle, einen daran angekoppelten Lichtleiter und sich daran anschließendes Konvertermaterial zur Umwandlung des kurzwelligeren Anregungslichtes in im Mittel langwelligeres Nutzlicht mit Weißlichteindruck. Das Nutzlicht setzt sich dabei aus einem langwelligeren, konvertierten Anteil und einem nichtkonvertierten Teil des Anregungslichts zusammen. Im Einzelnen ist eine Steckverbindung zu einem transparenten Körper, ein Konverter im Transmissionsbetrieb und ein optisches Bauteil zur Abstrahlung des konvertierten Nutzlichtes in Vorzugsrichtung vorgesehen. Ein Kühlkörper für den Konverter ist nicht vorhanden. Wenn bei einer derartigen Licht emittierenden Vorrichtung ein Lichtleiter beschädigt wird, kann dies zu gefahrvollen Situationen führen, wenn Laser als Anregungslichtquellen benutzt werden. Die Licht emittierende Vorrichtung ist deshalb mit einer zusätzlichen Detektionsvorrichtung versehen, um eine Beschädigung des oder der Lichtleiter festzustellen und ggf. die Energieversorgung der Anregungslichtquelle abzuschalten. Die Detektionsvorrichtung kann an dem Lichteintrittsende für Anregungslicht vorhanden sein und rückgeführtes Licht vom Konverter rückempfangen, wodurch angezeigt wird, dass der Lichtleiter funktionsfähig und unversehrt ist. Eine andere Methode der Fehlerfeststellung besteht darin, ein Leitungsnetzwerk auf Stromfluss zu überprüfen, bei dem eine oder mehrere Drähte durch Mantelbereiche des oder der Lichtleiter verlaufen. Bei einem Bruch des Lichtleiters sollte es zu einem Bruch des mitlaufenden Drahtes kommen, was zu einer Stromunterbrechung führt und damit zur Detektion eines Fehlers. Bei Auftritt eines Fehlers wird die Strahlungsquelle ausgeschaltet. Der Aufbau der Licht emittierenden Vorrichtung ist derart, dass das Konversionsmaterial nur im Transmissionsbetrieb arbeitet. Dabei ist die Kühlung des Konversionsmaterials sehr schwierig durchführbar. Wegen der bei der Konversion anfallenden Wärme ist aber eine wirksame Kühlung unumgänglich.

Aus DE 10 2010 034 054 A1 ist eine laserbasierte Weißlichtquelle bekannt, bei der ein Laser mittels einer Sammellinse einen Leuchtfleck in einem Konverter erzeugt, um im Transmissionsbetrieb weißes Nutzlicht abzugeben. Zur Vermeidung hoher Temperaturen am Leuchtfleck wird der Konverter unter Einbezug von wärmeleitfähigem Material hergestellt, zusätzlich durch Luft gekühlt und/oder rotieren lassen, um den Leuchtfleck im Konvertermaterial rundum wandern zu lassen.

Die Verwendung von mehreren Lichtleitern nebeneinander in einer lichtemittierenden Vorrichtung mit Konverter im Transmissionsbetrieb ist aus US 2010/0254153 A1 bekannt.

US 2008/0075406 A1 zeigt eine optische Komponente mit einem Konverter, einem zu diesem führenden Lichtleiter, einem Halter der Lichtleiter und einer Kappe zur Befestigung des Konverters an dem Halter. Die Kappe und der Halter bestehen aus Material mit hoher Wärmeleitfähigkeit, um möglichst Wärme von dem Konverter abzuführen, der im Transmissionsbetrieb beaufschlagt wird.

Licht emittierende Vorrichtungen teilweise auch im Remissionsbetrieb für Scheinwerfer sind aus US 2011/0148280 A1, US 2011/0279007 A1, US 2011/0280033 A1, US 2012/0106178 A1, US 2012/0106183 A1 und US 2012/0069593 A1 bekannt. Bei diesen ist das Konvertermaterial als Block im Fokus des parabolförmigen Scheinwerferspiegels angeordnet, wobei sich zur Befestigung des Konverters eine transparente Platte quer durch den Parabolspiegel erstreckt (US 2011/0148280 A1, US 2011/0279007 A1, US 2011/0280033 A1, US 2012/0069593 A1), oder es wird eine Trägerwand längs der Achse des Parabolspiegels gebildet, auf welcher der Konverter befestigt ist (US 2012/0106178 A1, US 2012/0106183 A1). Ein faseroptisches Konversionsmodul, das an einem Ende mit Steckern zur Lichteinkopplung und am anderen Ende mit einem Lichtaustrittsfenster zur Abgabe von Nutzlicht versehen ist und das als Ganzes in ein Nutzgerät, zum Beispiel einen Parabolspiegel, einsetzbar ist, ist aus den angegebenen Dokumenten nicht entnehmbar.

Der Erfindung liegt die Aufgabe zugrunde, ein faseroptisches Konversionsmodul zu schaffen, das sich als Montageteil in eine Beleuchtungseinrichtung zwischen einer Anregungslichtquelle und einem Scheinwerfer zur Abgabe von Nutzlicht eignet und eine gute Wärmeabfuhr ermöglicht.

Eine weitere Aufgabenstellung liegt in der Verbesserung der Strahlsicherheit bei der Verwendung von Laserlicht in Beleuchtungseinrichtungen.

In diesem Zusammenhang soll ein faseroptisches Konversionsmodul geschaffen werden, das gefährliches Anregungslicht im Falle von Laser oder Laserdioden als Lichtquellen daran hindert, nach außen zu treten, selbst wenn, wie es bei Autounfällen vorkommt, der Autoscheinwerfer zerstört und Lichtleitfasern dabei zerbrochen werden, die in den Autoscheinwerfer führen.

Eine weitere Zielrichtung der Erfinder besteht darin, ein faseroptisches Konversionsmodul zu schaffen, das Teil einer Fehlerdetektionseinrichtung bildet, die Brüche in Lichtleitfasern feststellen und die Abschaltung der Anregungslichtquelle veranlassen kann.

Das faseroptische Konversionsmodul gemäß Erfindung umfasst wenigstens eine Lichtleitfaser, einen Auskoppelkopf, einen Konverter, einen Kühlkörper sowie ein Lichtaustrittsfenster. Die Lichtleitfaser weist ein mit einem Stecker versehenes Lichteintrittsende zur Ankopplung an zugeordnete Anregungslichtquellen auf. Der Auskoppelkopf sorgt dafür, dass das Lichtaustrittsende der Lichtleitfaser das Anregungslicht auf einen Leuchtfleck richtet, der sich auf der Oberfläche des Konverters befindet. Das kurzwelligere Anregungslicht dringt zum größten Teil in den Konverter ein und wird dort in langwelligeres Konversionslicht umgewandelt, das zusammen mit gestreutem Anregungslicht in einem nutzbaren Abstrahlwinkel als Nutzlicht emittiert wird, während störend reflektiertes Anregungslicht (der sogenannte Fresnel-Reflex) von einer Lichtblende aufgefangen und unschädlich gemacht wird. Im Falle eines Autoscheinwerfers wird das Nutzlicht an einen Parabolspiegel abgegeben. Das faseroptische Konversionsmodul kann auch mehrere Lichtleitfasern umfassen.

Weiterhin kann ein Trägergehäuse mit dem Auskoppelkopf und einem Verteilergehäuse gebildet werden und zur Halterung der wenigstens einen Lichtleitfaser dienen. Im Fall von mehreren Lichtleitfasern sorgt der Auskoppelkopf dafür, dass die jeweiligen Lichtaustrittsenden der Lichtleitfasern das Anregungslicht auf einen Leuchtfleck richten. Das Trägergehäuse ist so gestaltet, dass im Konverter erzeugte Wärme über das Trägergehäuse abgeführt und dissipiert werden kann.

Stecker von Lichtleitfasern besitzen eine räumliche Ausdehnung in radialer Richtung größer als Lichtleitfasern, und das gleiche ist von Anregungslichtquellen, beispielsweise Laserdioden, zu sagen. Am Lichteintrittsende weist demnach das Trägergehäuse des faseroptischen Konversionsmoduls eine Mindestbreite auf, die beträchtlich größer ist als die Breite des zu erzeugenden Leuchtfleckes auf dem Konverter. Im Falle mehrerer Lichtleitfasern müssen die mit Anregungslicht beaufschlagten Lichtleitfasern demnach zusammengeführt werden, und hierzu dient das Verteilergehäuse, das die von den Steckern zu den jeweiligen Lichtaustrittsenden führenden Lichtleitfasern bündelt.

Zur optischen Überwachung des Konverters kann neben den das Anregungslicht führenden Lichtleitfasern eine weitere Lichtleitfaser vorgesehen sein, die im Großen und Ganzen parallel zu den Lichtleitfasern des Anregungslichtes verläuft und konvertiertes Licht zu Prüfzwecken rückkoppelt, um dieses über einen Stecker an einen Photodetektor weiterzugeben. Der Photodetektor bildet Teil einer Überwachungseinrichtung der Funktionalität der Beleuchtungseinrichtung. Wenn es während des Betriebes der Anregungslichtquellen zu einem Bruch einer oder mehrerer Lichtleitfasern kommt, nimmt die Helligkeit des Leuchtfleckes auf dem Konverter ab oder der Lichtfleck verschwindet ganz, was durch den Photodetektor festgestellt wird, woraufhin die Anregungslichtquellen abgeschaltet werden.

Ein Bruch von Lichtleitfasern kann auch elektrisch festgestellt werden. Die Lichtleitfasern sind zu diesem Zweck elektrisch leitfähig beschichtet und im Falle mehrere Lichtleitfasern gegenseitig isoliert, jedoch an einem Knotenpunkt nahe der Lichtaustrittsenden elektrisch miteinander verbunden. Ein Bruch in einer Lichtleitfaser führt dann zu einer Unterbrechung des elektrischen Stromkreispfades, was durch fehlenden oder abfallenden Strom in Nachweismitteln feststellbar ist und zur Abschaltung der Anregungslichtquellen ausgenutzt wird.

Die Einrichtung zur elektrischen Fehlerfeststellung kann auch eine unterbrechbare Leitungsbahn auf einem Nutzlicht-Austrittsfenster des Auskoppelkopfes umfassen. Wenn das Nutzlicht-Austrittsfenster eine Beschädigung erfährt, wird die darauf befindliche Leitungsbahn unterbrochen und dies führt zu einer Fehlerfeststellung, wie beschrieben.

Zur Verhinderung des Austritts von Anregungslicht (Laserlicht) selbst bei gebrochenen Lichtleitfasern sind in einer Ausführungsform der Erfindung metallische Schutzschläuche vorgesehen. Solche metallischen Schutzschläuche erstrecken sich von dem jeweiligen Stecker zu dem Verteilergehäuse und beherbergen einzelne Lichtleitfasern, während ein gemeinsamer metallischer Schutzschlauch sich vom Verteilergehäuse bis zum Auskoppelkopf erstreckt und die zusammengeführten Lichtleitfasern umgibt. In einer weiteren Ausführungsform der Erfindung ist ein Verteilergehäuse mit sichelförmigem Verteilergehäuse vorgesehen, in welchem die Lichtleitfasern in Schläuchen bogenförmig geführt sind, um einen Längenausgleich zu ermöglichen. Ein Längenausgleich kann notwendig sein, um Effekte der unterschiedlichen Wärmeausdehnung der Lichtleitfasern und der metallischen Schutzschläuche zu kompensieren. Auch eine Biegung, Dehnung oder Stauchung der Schutzschläuche macht einen Längenausgleich notwendig. Solche Biegungen können beim Einbau des Konversionsmoduls oder auch im Betrieb vorkommen, wenn der Scheinwerfer so ausgeführt ist, dass er sich relativ zur Anregungslichtquelle bewegen kann. Im Falle nur einer Lichtleitfaser kann sich der metallische Schutzschlauch auch zwischen dem Stecker und dem Auskoppelkopf erstrecken. Solche Metallschläuche sind in der Lage, intensives Laserlicht jedenfalls kurzzeitig ohne Beschädigung durchzustehen und damit am Austritt zu hindern, wenn wegen eines Unfalls Lichtleitfasern in dem Konversionsmodul gebrochen sein sollten.

Bei der Anwendung des faseroptischen Konversionsmoduls in einem Autoscheinwerfer kommt es zu heftigen Rüttelbelastungen der Lichtleitfasern. Aus diesem Grund ist in dem metallischen Schutzschlauch ein isolierender Kunststoffschlauch als innerer Schutzschlauch vorgesehen, der die Lichtleitfaser umgibt und dadurch gegen Auftreffen gegen die Innenwand des äußeren Schutzschlauches schützt. Zudem wird die Lichtleitfaser auch vor Umwelteinflüssen wie Feuchtigkeit besser geschützt.

Zur Führung und Halterung der Lichtleitfasern in dem Auskoppelkopf können unterschiedliche Maßnahmen ergriffen werden. Die Lichtleitfasern können in V-förmigen Nuten zwischen einem Unterteil und einem Oberteil des Auskoppelkopfes gehaltert werden. Man kann auch mehrere der Lichtleitfasern in einer größeren V-förmigen Nut haltern. Anstelle von Nuten können auch Bohrungen in dem Auskoppelkopf zur Führung und Halterung der Lichtleitfasern verwendet werden. Zweckmäßigerweise weist der Auskoppelkopf ein Einsatzteil auf, in welchen die Lichtleitfasern zu der Lichtleiter-Konzentrationsstelle des Auskoppelkopfes geführt und gehaltert sind.

Die Zuführung des Anregungslichtes auf den Konverter kann auch über ein fokussierendes optisches Element erfolgen. Dies kann eine Stablinse, eine Kugellinse oder eine asphärische Linse sein. Eine Stablinse kann dabei ein plangeschliffenes Lichteintrittsende für Anregungslicht und ein linsenförmiges Lichtaustrittsende ebenfalls für Anregungslicht aufweisen. Durch das fokussierende optische Element kann divergentes Licht aus den Lichtleitfasern auf den Konverter fokussiert werden. Dies ermöglicht eine Erhöhung des Abstands zwischen dem Lichtaustrittsende der Lichtleitfaser und dem Konverter.

Bei einer bevorzugten Ausführungsform der Erfindung weist der Auskoppelkopf am Lichtaustrittsende der Lichtfasern eine Gehäusestufe auf, der eine Schrägfläche des Konverters gegenübersteht.

Der Konverter kann mit einem Spiegel unterlegt und mit einer Blende versehen sein, um den Saum von konvertiertem Gelblicht, das für die Weißlichterzeugung im Überschuss vorhanden ist, aufzufangen.

Dasjenige Anregungslicht, welches als Strahlenbündel auf den Konverter auftrifft, wird an dessen Oberfläche als Hauptreflex, der sogenannte Fresnel-Reflex, reflektiert und dieses weitgehend monochromatische reflektierte Anregungslicht stellt eine Gefahrenquelle dar, wenn es nach außen dringt. Deshalb wird es durch eine Strahlenfalle abgefangen, die eine im Abstand zu dem Konverter an dem Auskoppelkopf angebrachte Lichtblende umfasst.

Der unerwünschte Fresnel-Reflex lässt sich bei der Verwendung von polarisiertem Licht, wie es bei Laserlicht vorliegt, durch Ausrichtung der Polarisation parallel zur reflektierenden Oberfläche reduzieren. Parallel polarisiertes Licht wird über den gesamten Winkelbereich weniger stark reflektiert als senkrecht polarisiertes. Liegt der Einfallswinkel nahe bei dem Polarisationswinkel, dem sogenannten Brewsterwinkel, wird der Reflexionsgrad nahezu Null. Da die Polarisation des Laserlichts in der Faser bei kurzen Längen, etwa in einem Bereich von 30 bis 50 cm, zum größten Teil erhalten bleibt, kann diese Eigenschaft des Lichts auch bei einem fasergekoppelten Bauteil wie vorliegend genutzt werden, um den Fresnel-Reflex zu reduzieren.

Ausführungsbeispiele der Erfindung werden anhand der Zeichnung beschrieben. Dabei zeigt:
- Fig. 1: ein faseroptisches Konversionsmodul, teilweise geschnitten,
- Fig. 2: eine Aufsicht des Konversionsmoduls,
- Fig. 3: einen Längsschnitt durch einen Auskoppelkopf,
- Fig. 4: eine perspektivische Ansicht eines Auskoppelkopfes,
- Fig. 5: ein erstes Ausführungsbeispiel eines Einsatzes im Auskoppelkopf,
- Fig. 6: ein zweites Ausführungsbeispiel eines Einsatzes im Auskoppelkopf,
- Fig. 7: ein drittes Ausführungsbeispiel eines Einsatzes im Auskoppelkopf,
- Fig. 8: ein viertes Ausführungsbeispiel eines Einsatzes im Auskoppelkopf,
- Fig. 9: den Aufbau einer Lichtleitfaser,
- Fig. 10: ein Schnitt durch ein Kabel mit Lichtleitfaser,
- Fig. 11: eine erste Ausführungsform einer Endhülse,
- Fig. 12: eine zweite Ausführungsform einer Endhülse,
- Fig. 13: eine dritte Ausführungsform einer Endhülse,
- Fig. 14: eine vierte Ausführungsform einer Endhülse,
- Fig. 15: ein Verteilergehäuse,
- Fig. 16: eine schematisierte perspektivische Darstellung von Einzelheiten des Auskoppelkopfes, geschnitten,
- Fig. 17: eine perspektivische Darstellung eines weiteren Auskoppelkopfes, geschnitten,
- Fig. 18: einen Längsschnitt durch den weiteren Auskoppelkopf,
- Fig. 19: eine Abdeckscheibe am Auskoppelkopf,
- Fig. 20: eine Faserbruch-Überwachungsschaltung und
- Fig. 21: eine Überwachungsschaltung für Faserbruch und Abdeckscheibenbruch.

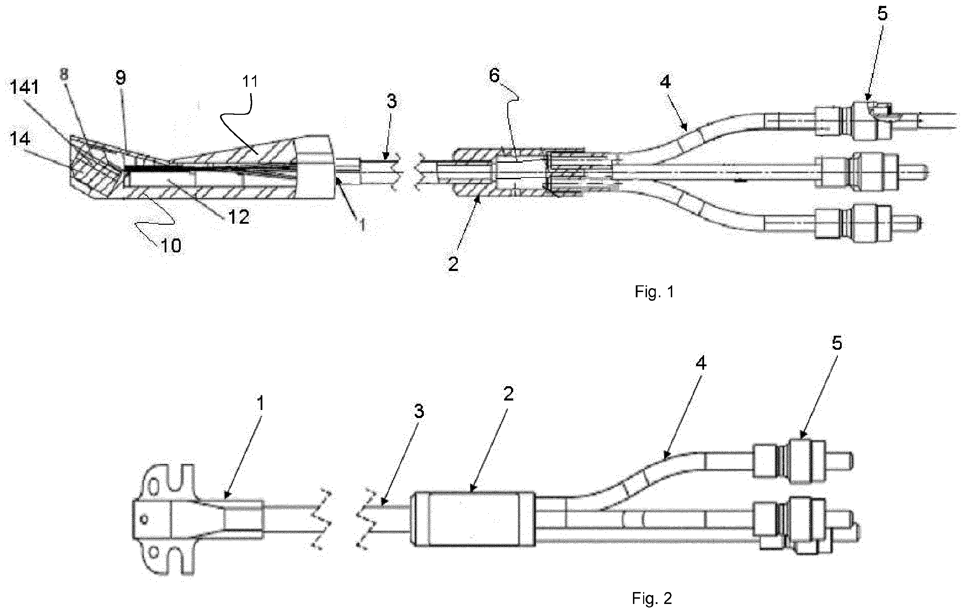

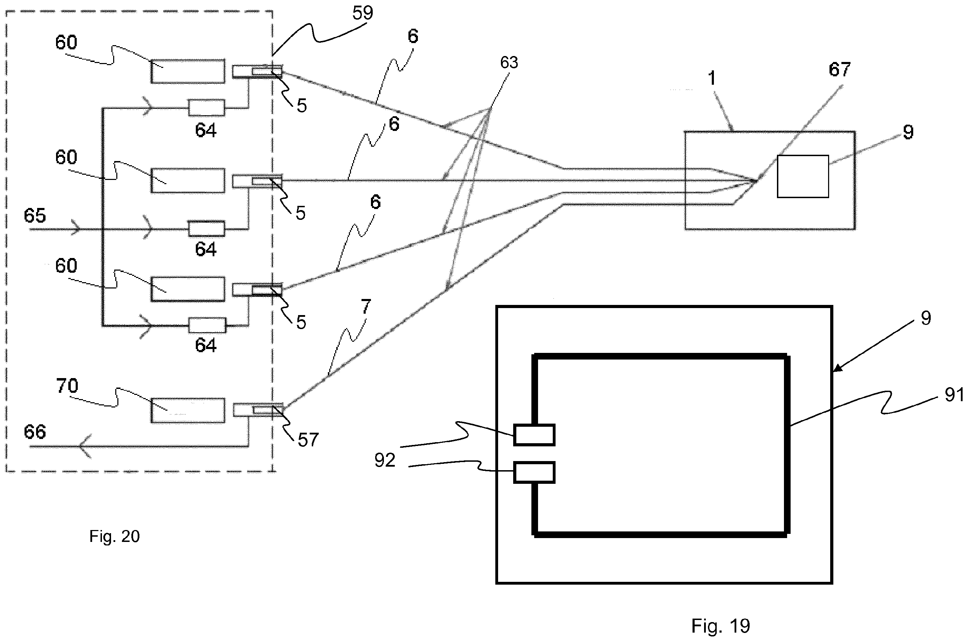

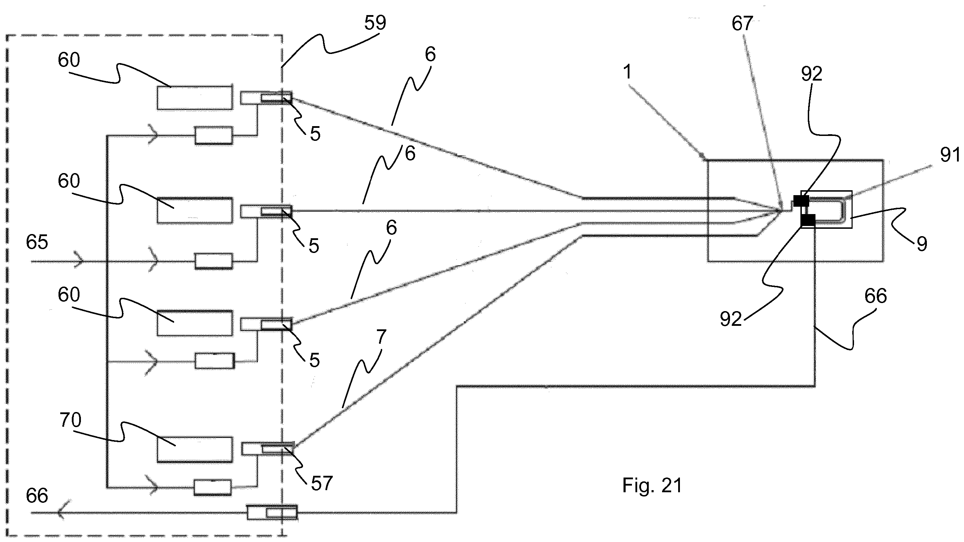

Das faseroptische Konversionsmodul ist insgesamt in den Fig. 1 und 2 für eine Ausführungsform mit drei Lichtleitfasern 6 dargestellt und umfasst einen Auskoppelkopf 1, ein Verteilergehäuse 2, ein Verbindungskabel 3 zwischen Verteilergehäuse und Auskoppelkopf sowie drei Zuführkabel 4, die jeweils mit einem SMA-Stecker 5 versehen sind. In Fig. 1 ist der Auskoppelkopf 1 teilvergrößert und geschnitten dargestellt. Der Auskoppelkopf 1 und das Verteilergehäuse 2 bilden ein Trägergehäuse für die Lichtleitfasern 6 in ihrem zusammengeführten Zustand. Innerhalb des Konversionsmoduls verlaufen die drei Lichtleitfasern 6, die ein Lichteintrittsende bei den SMA-Steckern 5 und ein Lichtaustrittsende in dem Auskoppelkopf 1 aufweisen. Die SMA-Stecker 5 sind zur Kopplung mit einzelnen Laserdioden 60 (Fig. 20, 21) ausgebildet, die ihr Anregungslicht in die einzelnen Lichtleitfasern 6 einkoppeln. Sowohl die Laserdioden 60 als auch die Stecker 5 benötigen einen radialen Freiraum relativ zu den Lichtleitfasern 6, können also nicht so dicht gepackt werden wie Lichtleitfasern. Am Lichteintrittsende weist deshalb das Konversionsmodul eine größere Raumbeanspruchung auf als im Bereich des Verteilergehäuses 2 oder des Auskoppelkopfes 1. Die knicklose Zusammenführung der Lichtleitfasern 6 bedingt deshalb eine gewisse Krümmung der Lichtleitfasern zwischen dem Lichteintrittsende bei den Steckern 5 und dem Lichtaustrittsende im Auskoppelkopf 1, wenn zwei oder mehrere durch Laserdioden beaufschlagte Lichtleitfasern 6 nebeneinander verwendet werden.

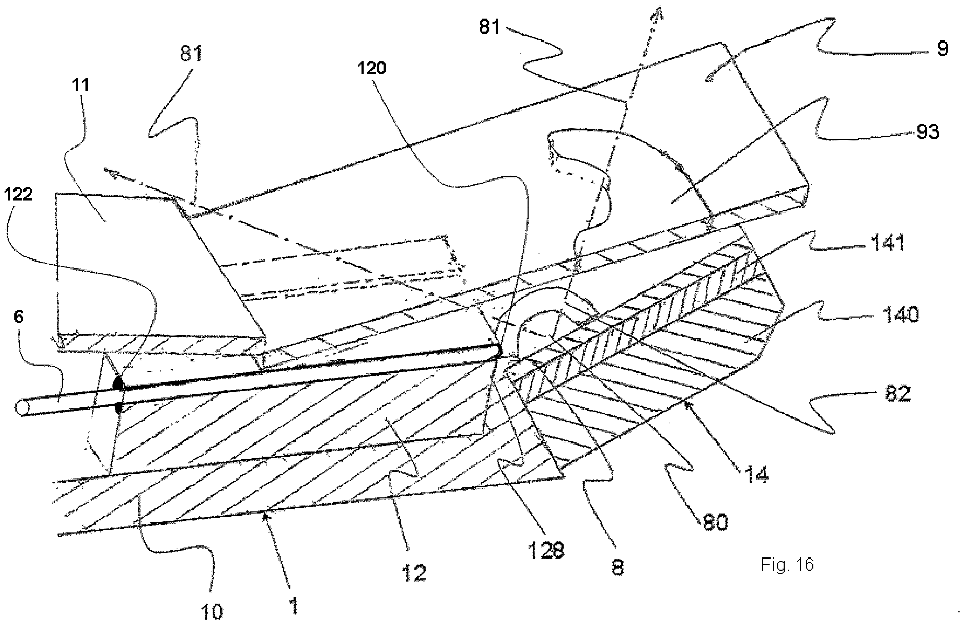

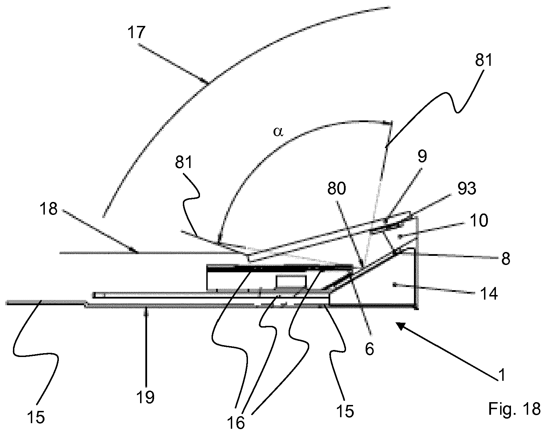

Das aus den Lichtfasern 6 austretende Anregungslicht fällt schräg auf einen Konverter 8, der das kurzwelligere Anregungslicht in langwelligeres Konversionslicht umwandelt, daneben aber auch Anregungslicht streut, so dass das remittierte Licht im Mittel langwelligeres Nutzlicht darstellt. Beim Nutzlicht wird meist Weißlichtcharakter angestrebt. Das Nutzlicht gelangt durch eine Abdeckscheibe 9 zu dem Nutzgeräteteil, das im Falle eines Scheinwerfers einen Parabolspiegel, ein Segment eines Parabolspiegels oder eine abgewandelte Parabolspiegelfläche darstellt. Wenn der Scheinwerfer im Wesentlichen paralleles Nutzlicht erzeugen soll, wird auf dem Konverter 8 ein kleiner Leuchtfleck 80 (Fig. 16, 18) erzeugt.

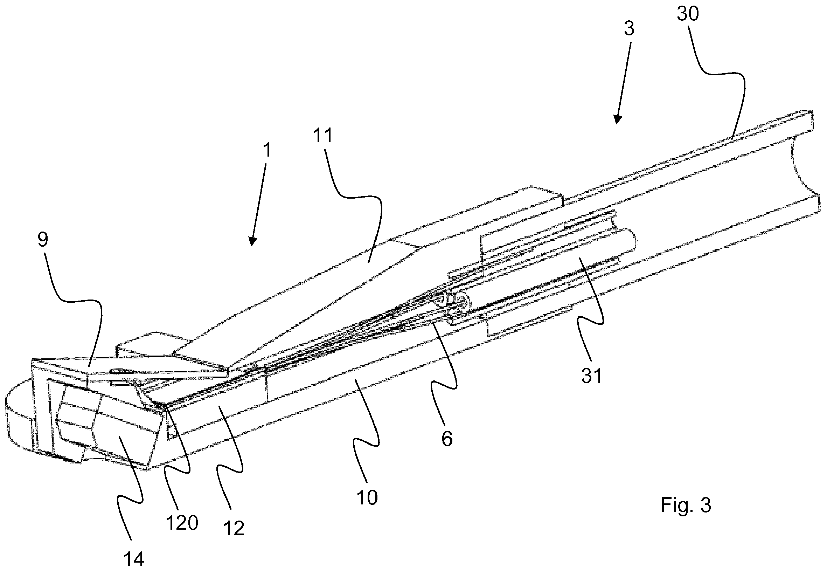

Fig. 3 zeigt einen Längsschnitt durch einen perspektivisch dargestellten Auskoppelkopf 1. Dieser umfasst ein Wärme gut leitendes Unterteil 10, ein Oberteil 11 und einen Einsatz 12. Das Verbindungskabel 3 zu dem Verteilgehäuse 2 hin weist einen metallischen Schutzschlauch 30 auf, der in dem Auskoppelkopf 1 wenigstens staubdicht, vorzugsweise druckwasserdicht eingeklebt ist. Die innerhalb des Schutzschlauches 30 verlaufenden Lichtleitfasern 6 werden zusätzlich durch Kunststoffschläuche 31 geschützt. Nach Verlassen der Kunststoffschläuche 31 streben die Lichtleitfasern 6 mit gewissen Krümmungen zu dem Einsatz 12 und zu einer Lichtleiter-Konzentrationsstelle 120 auf dem Einsatz 12 hin.

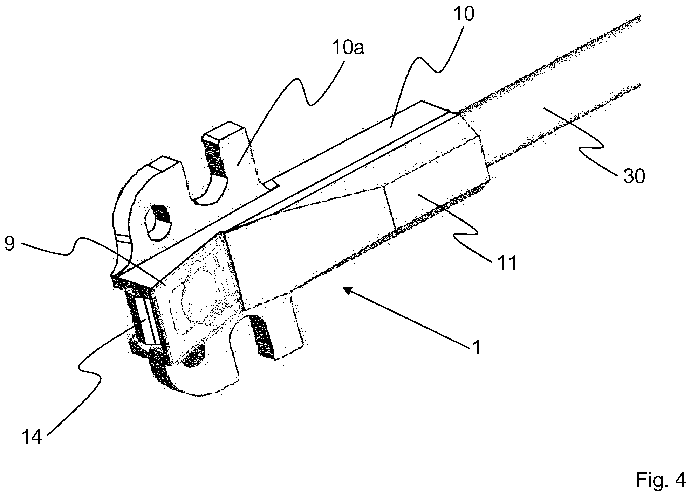

Fig. 4 zeigt den Auskoppelkopf 1 perspektivisch, der einen Befestigungsflansch 10a am Unterteil 10 aufweist.

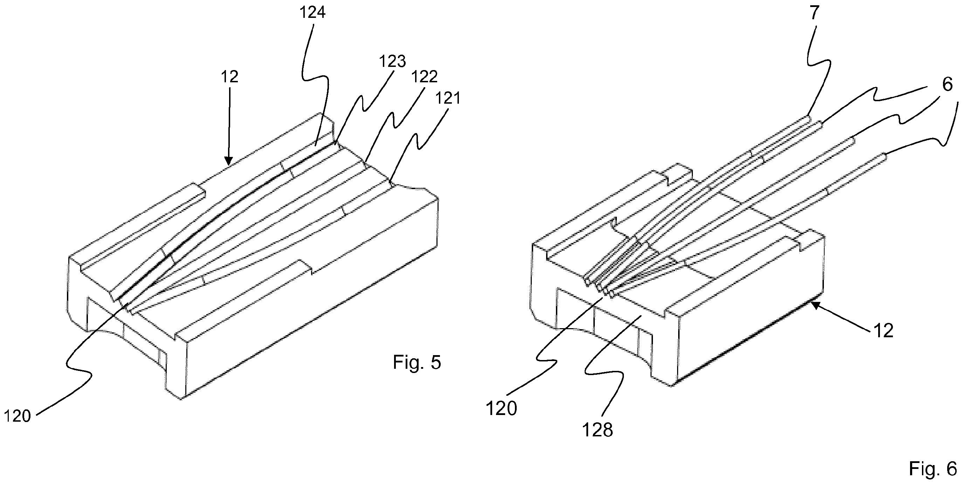

Fig. 5 zeigt eine erste Ausführungsform eines Einsatzes 12. Zur Halterung der Lichtleitfasern 6 sind drei V-förmige Nuten 121, 122 und 123 vorgesehen, die zu der Lichtleiter-Konzentrationsstelle 120 führen, wobei die äußeren Nuten 121 und 123 einen leichten Bogen einschlagen. Parallel zur Nut 123 verläuft eine weitere Nut 124, die zur Halterung einer weiteren, rückführenden Lichtleitfaser 7 genutzt werden kann.

Fig. 6 zeigt die Führung und Halterung der Anregungslicht führenden Lichtleitfasern 6 und der rückführenden Lichtleitfaser 7 bei einem leicht abgewandelten Einsatz 12 gegenüber Fig. 5.

Die Fasern werden bündig zu der Lichtaustrittsfläche poliert. Damit ist die Lichtleitfaserendfläche der schräg verlaufenden Lichtleitfaser zur Lichtleitfaserachse geneigt, was zur Brechung des austretenden Lichts führt. Dadurch können die Winkel der Nuten gegenüber einer Ausführung mit gerade gebrochenen Enden der Lichtleitfaser reduziert werden, was sich vorteilhaft auf die Breite des Bauteils auswirkt.

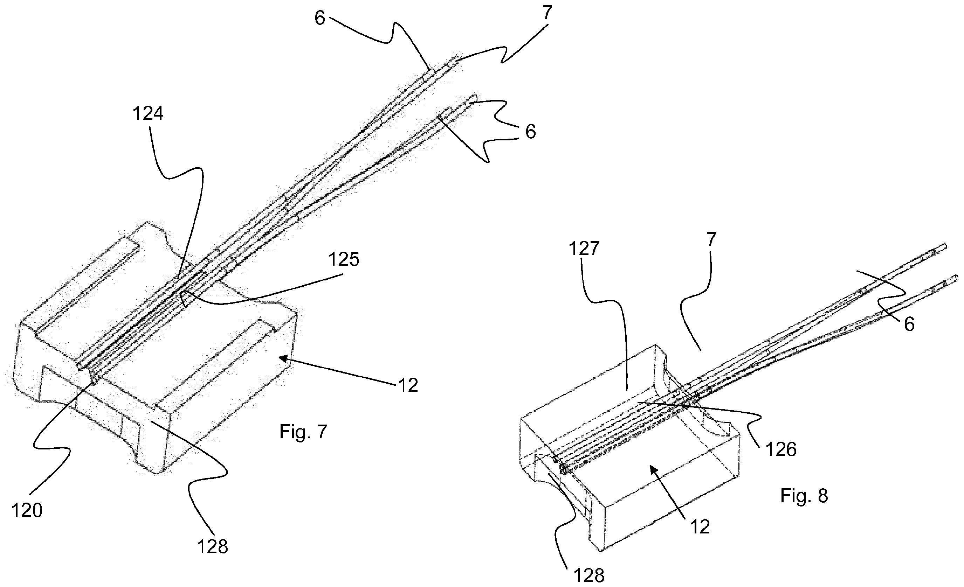

Fig. 7 zeigt eine Ausführungsform des Einsatzes 12 mit einer tiefen V-Nut 125 zur Aufnahme der Anregungslicht führenden Lichtleitfasern 6. Die weitere rückführende Lichtleitfaser 7 verläuft in der Nut 124 parallel zu dem Bündel der Lichtleitfasern 6.

Fig. 8 zeigt eine weitere Ausführungsform des Einsatzes 12 mit einem Bohrungskanal 126 zur Aufnahme der Lichtleitfasern 6 und einem Bohrungskanal 127 zur Aufnahme der Lichtleitfaser 7. Die Lichtleitfasern 6 verlaufen im Einsatz 12 parallel zueinander und erzeugen einen zusammengesetzten Leuchtfleck 80 bestehend aus einzelnen, sich teilweise überlappenden Leuchtflecken der einzelnen Lichtleitfasern.

Bei allen Ausführungsformen der Fig. 5 bis 8 weist der Einsatz 12 eine Frontfläche 128 auf, die nach Einbau des Einsatzes in den Auskoppelkopf 1 eine Stufe bildet, von der aus ein Freiraum zu dem Konverter 8 führt. Das aus den Lichtleitfasern 6 austretende Anregungslicht überlagert sich am Leuchtfleck 80.

Als Alternative zu der Gestaltung des Einsatzes 12 in den Fig. 5 bis 8 kann auch eine Stablinse (nicht dargestellt) verwendet werden, die aus einem zylindrischen Stab mit einer plan polierten Lichteintrittsfläche und mit einer linsenförmig gekrümmten Austrittsfläche bestehen kann, um das Anregungslicht auf den Konverter 8 am Leuchtfleck 80 zu konzentrieren. Die das Anregungslicht führenden Lichtleitfasern 6 werden in diesem Fall von einer Ferrule am Eintrittsende der Stablinse zusammengehalten.

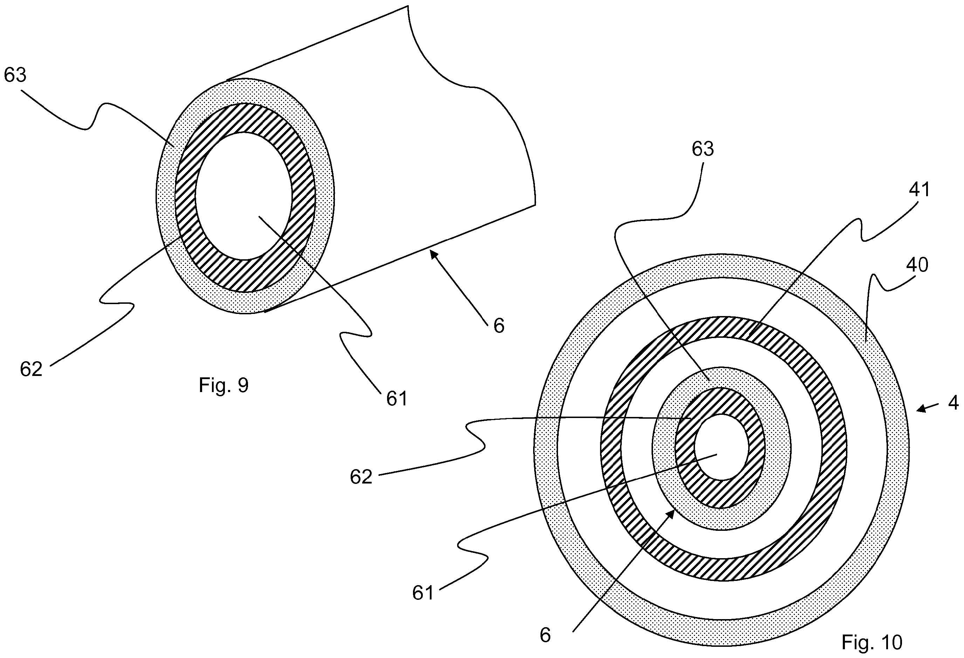

Fig. 9 zeigt eine der Lichtleitfasern 6 in einem perspektivischen Schnittbild. Es gibt einen Faserkern 61 aus Quarzglas höheren Brechungsindex, einen Fasermantel 62 ebenfalls aus Quarzglas, jedoch niedrigeren Brechungsindex und eine leitfähige Beschichtung 63. Bei der leitfähigen Beschichtung 63 kann es sich um brüchiges Material handeln, das bei Bruch der Glasfaser 61, 62 ebenfalls bricht und so durch Unterbrechung eines Strompfades die Anzeige eines Glasfaserbruches ermöglicht. Bevorzugt wird jedoch, dass die leitfähige Schicht 63 aus Aluminium gefertigt ist, womit ein Glasfaserbruch angezeigt werden kann und das zudem die Oberfläche der Lichtleitfaser besonders gut schützt. Hierdurch kann das Bruchrisiko weiter reduziert werden. Andere Maßnahmen zu diesem Zweck bestehen in einer Beschichtung der Glasfaser mit Tefzel über Polyimid, Tefzel über Aluminium, oder Tefzel über Acrylat.

Fig. 10 zeigt einen Querschnitt durch eines der Zuführkabel 4, die sich zwischen den Steckern 5 und dem Verteilergehäuse 2 erstrecken. Jede der Lichtleitfasern 6 ist von einem Isolierschlauch 41 aus Kunststoff umgeben und dieser wird wiederum von einem metallischen Schutzschlauch 40 umgeben. Die Lichtleitfasern 6 sind somit gegen Bruch ziemlich gut geschützt. Wenn es trotzdem zu einem Bruch kommt, bei dem kurzwelliges Anregungslicht aus der Bruchstelle austritt, dann ist damit zu rechnen, dass das energiereiche Anregungslicht noch nicht in der Lage ist, den metallischen Schutzschlauch zu zerstören und gefahrvoll in die Außenwelt auszutreten.

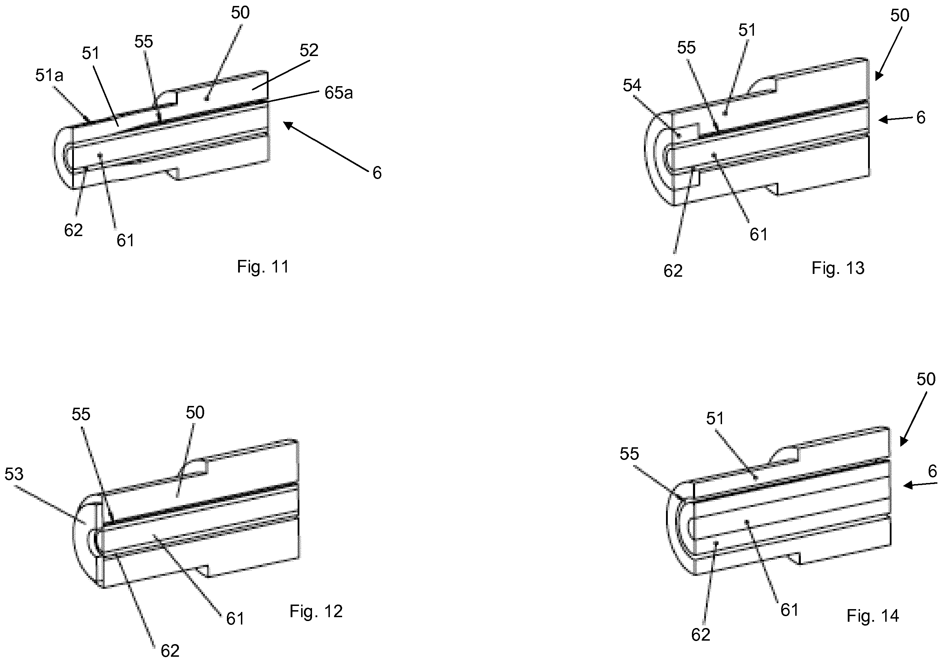

Die Fig. 11 bis 14 zeigen Varianten einer Endhülse 50 für die Lichtleitfaser 6 am Lichteintrittsende bei dem Stecker 5. Die Endhülse 50 ist abgestuft und weist einen Steckabschnitt 51 und einen Anschlagabschnitt 52 auf. Die Endhülse 50 soll so gestaltet werden, dass bei einer Dejustage zwischen Eintrittsfläche der Lichtleitfaser 6 und der Austrittsfläche der Anregungslichtquelle keine Zerstörung am Stecker 5 auftritt. Das Problem kann mit einer Crimphülse in Kombination mit einer Al-gecoateten Lichtleitfaser oder einem größerem Manteldurchmesser oder mit mehrstufigem Kleben der Lichtleitfaser angegangen werden. Die Fig. 1 bis 14 zeigen hierzu Ausführungsbeispiele, bei denen die Lichtleitfaser 6 über eine Klebschicht 55 in der Endhülse 50 verankert ist.

Im Ausführungsbeispiel der Fig. 11 wird der Steckabschnitt 51 der Endhülse 50 am vorderen Ende 51a gecrimpt, wodurch die Klebeschicht 55 verdrängt, der Klebespalt 55a so zum Verschwinden gebracht wird. Im Ausführungsbeispiel der Fig. 12 wird eine Lochblende 53 so auf der Stirnfläche der Endhülse 50 befestigt, dass nur die Faser 61 unbedeckt bleibt. Die Lochblende 53 ist gegenüber der sehr intensiven Anregungsstrahlung tolerant. Im Ausführungsbeispiel der Fig. 13 wird statt der Lochblende ein Keramikverguss 54 benutzt, der den Fasermantel 62 der Lichtleitfaser eng umgibt. Schließlich wird in der Ausführungsform der Fig. 14 ein verdickter Fasermantel (gegenüber den Ausführungsformen nach den Fig. 11, 12, 13) benutzt.

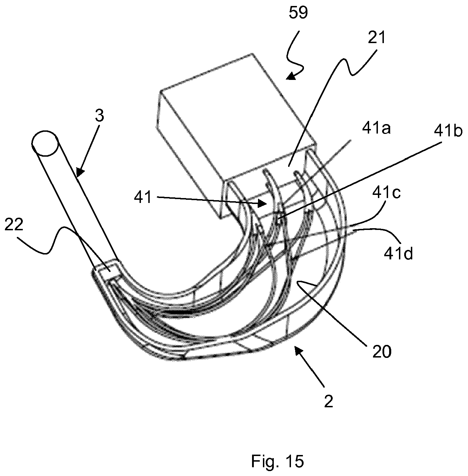

Fig. 15 zeigt ein Verteilergehäuse 2 mit einem sichelförmigen Innenraum 20. Das Verteilergehäuse 2 schließt an ein Gehäuse 59 zur Aufnahme der Stecker 5 und der Lichtquellen 60 sowie auch eines Lichtsensors 70 an. Aus dem Gehäuse 59 treten die Zuführkabel 4 aus, in deren Inneren sich jeweils ein isolierender Schutzschlauch 41 (Fig. 10) befindet, der wiederum die betreffende Lichtleitfaser 6 schützt. Die Lichteintrittsseite 21 des sichelförmigen Verteilergehäuses 2 ist wesentlich breiter als die Lichtaustrittsseite 22. An der Lichtaustrittsseite 22 werden die Lichtleitfasern 6 mit ihren Schutzschläuchen 41 in das Verbindungskabel 3 geführt, das in den Auskoppelkopf 1 einmündet. Der Betrag der Wärmedehnung der Lichtleitfaser 6 einerseits und des Schutzschlauchs 41 andererseits kann sich beträchtlich unterscheiden, so dass ein Längenausgleich zur Vermeidung von Zugspannungen der Faser benötigt wird. Der Schutzschlauch 41 kann zu diesem Zweck zwei Abschnitte 41a, 41b unterschiedlichen Durchmessers aufweisen, die teleskopierend ineinander greifen und so einen Verschiebebereich des Schutzschlauches 41 bilden, durch den ein thermischer Längenausgleich zwischen Lichtleitfaser und Schutzschlauch geschaffen werden kann.

Auch zwischen den einzelnen Lichtleitfasern sollte ein Längenausgleich geschaffen werden, um Relativbewegungen der Fasern untereinander kompensieren zu können, die bei einer Bewegung des Konversionsmoduls auftreten können. Bei dem sichelförmigen Innenraum 20 bedeutet dies, dass die Schläuche 41 unterschiedliche Bögen einnehmen können müssen. Die minimale und die maximale Bogenweite sind bei 41c und 41d markiert.

Statt im Bogen geführt zu werden, wie es Fig. 15 zeigt, können die Schutzschläuche 41 auch bereichsweise einen helixförmigen Verlauf zwischen der Anregungslichtquelle und dem Auskoppelkopf nehmen. In diesem helixförmigen Bereich gibt es die Ausweichmöglichkeit durch Zu- oder Abnahme der Steigung der Helix. Dies lässt sich mit einem eingebauten Verschiebebereich von Helixabschnitten kombinieren.

Eine weitere Möglichkeit des Längenausgleiches besteht darin, Schutzschlauch und Lichtleitfaser gemäß einer Schleife zur führen, wobei sich die Schleifenweite bei Temperaturveränderung ändern kann und die unterschiedliche Ausdehnung zwischen Lichtleitfaser und Schutzschlauch durch einen Verschiebebereich des Schutzschlauches ausgleichen lässt.

Fig. 16 zeigt den vorderen Abschnitt des Auskoppelkopfes 1 in einer perspektivischen Schnittansicht. Der Konverter 8 ist auf der gekühlten Oberfläche eines Kühlkörpers 14 aufgebracht, der schräg zur Längserstreckung des Auskoppelkopfes 1 angeordnet ist und gut Wärme leitend mit dem Unterteil 10 des Auskoppelkopfes 1 verbunden ist. Die Lichtleitfasern 6 erstrecken sich in Längserstreckung des Auskoppelkopfes 1 und bestimmen die vorgegebene Strahlrichtung des Anregungslichtes schräg auf den Leuchtfleck 80. Der dauerhafte mechanische Halt, auch wegen starker Vibrationen in Fahrzeugen, wird durch eine Hinterschnitt-Andruckverbindung garantiert. Zusätzlich kann Wärmeleitkleber angewandt werden. Der Konverter 8 ist mit einem Spiegel 141 unterlegt, der mit einem wärmeleitfähigen Kleber (z.B. Silberleitkleber) an dem Hauptkörper 140 des Kühlkörpers 14 befestigt ist. Zu Zwecken der Wärmeableitung wird Metall als Material des Auskoppelkopfes 1 samt Kühlkörper 14 bevorzugt.

Das aus den Lichtleitfasern 6 austretende kurzwelligere Anregungslicht überspringt die Stufe 128 und erzeugt auf dem Konverter 8 einen rund-ovalen Leuchtfleck 80, von dem aus im Mittel langwelligeres Nutzlicht in Form einer Lichtkeule 81 im Emissionsbetrieb abgegeben wird. Wenn paralleles Scheinwerferlicht angestrebt wird, wird zur Gelbsaum-Vermeidung der Leuchtfleck 80 durch eine Ringblende 82 eingegrenzt. Der Innenraum des Auskoppelkopfes 1, in welchem der Konverter 8 sitzt, wird durch die Auskoppelscheibe 9 (Fig. 3) abgeschlossen, die ein Fenster für das austretende Nutzlicht bildet. Das Anregungsstrahlenbündel dringt mit größeren Anteilen in das Konvertermaterial ein, jedoch bildet sich an der Oberfläche des Konverters 8 auch ein Reflex, den man als einen Fresnel-Reflex bezeichnet und den man durch eine Strahlenblende 93 an der Auskoppelscheibe 9 abschirmen kann. Zwischen der Oberfläche des Kühlkörpers 14 und der Unterseite der Strahlenblende 93, ggf. unter Einbezug von Teilen des Konverters, wird eine Strahlenfalle gebildet, welche das reflektierte kurzwellige Anregungslicht zwischen der Unterseite der Strahlenblende 93 und der Oberseite des Konverters 8 totlaufen lässt.

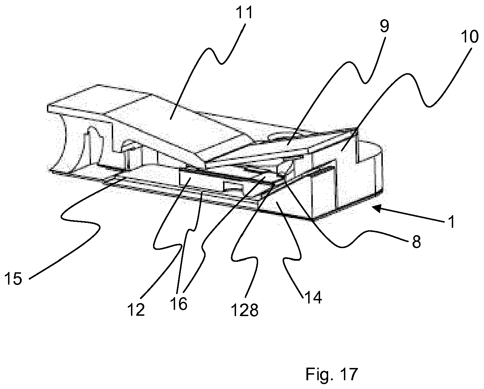

Fig. 17, 18 zeigen einen Längsschnitt durch eine weitere Ausführungsform des Auskoppelkopfes 1. Gleichartige Teile gegenüber der Ausführungsform nach Fig. 16 sind mit den gleichen Bezugsziffern belegt. Bei dieser Ausführungsform des Konverterkopfes ist die Wärmeableitung von dem Konverter 8 gegenüber der Ausführungsform nach Fig. 16 verbessert. Die dreiecksförmige Seitenfläche des Kühlkörpers 14 ist zwar weiterhin in flächigem Kontakt mit dem gut leitenden Unterteil 10 des Auskoppelkopfes 1, zusätzlich ist jedoch ein Wärmeleitkörper 15 von der Unterseite des Kühlkörpers 14 zu einer nicht dargestellten Wärmesenke vorgesehen, so dass die Wärmeableitung nicht nur über das Gehäuse des Auskoppelkopfes erfolgt, sondern ein weiterer Wärmeleitpfad errichtet worden ist. Damit werden keinen großen Anforderungen an die Wärmeleitfähigkeit des Gehäuseteils 10 mehr gestellt und es kann z.B. auch aus Edelstahl gefertigt werden. Um einen besonders guten thermischen Kontakt zwischen dem Kühlkörper 14und der hier nicht eingezeichneten Wärmesenke zu ermöglichen, kann der Kühlkörper 14 etwas über die Ebene der Gehäuseteilunterseite hinausstehen, jedoch nur so weit, dass der Wärmeleitpfad 15 den Höhenunterschied ausgleichen kann. Der Kühlkörper 14 kann aus Kupfer gefertigt werden. Um die Korrosionsbeständigkeit zu erhöhen, kann er mit einer Ni/Ag Beschichtung oder einer anderen Korrosionsschutzschicht versehen sein.

In allen Ausführungsformen des Auskoppelkopfes 1 weist der Einsatz 12 eine Frontfläche 128 auf, die eine Stufe bildet, über die hinweg der austretende Strahl des Anregungslichtes den Freiraum zwischen Frontfläche 128 und schräger Oberseite des Konverters 8 überfliegt. Um den Leuchtfleck 80 gegenüber der Ausführungsform nach Fig. 16 mehr in die Mitte des Konverters 8 zu rücken, weist der Einsatz 12 unterhalb der Stufe 128 eine Schrägfläche passend zu der Neigung des Konverters 8 auf.

Zum Schutz gegen austretendes Laserlicht bei Beschädigung des Auskoppelkopfes sind noch Laserschutzplatten 16 im Bereich des Einsatzes 12 vorgesehen.

Fig. 18 zeigt den Auskoppelkopf 1 in Bezug auf einen Reflektor 17 eines Autoscheinwerfers. Der Leuchtfleck 80 sitzt im Fokalpunkt des Reflektors 17. Um dies einzustellen, gibt es eine Reflektor-Bezugsfläche 18 am Auskoppelkopf. Eine weitere Bezugsfläche 19 dient zum richtigen Einbau des Auskoppelkopfes. Eingezeichnet ist ferner der Abstrahlwinkel α des Nutzlichtes zwischen den Grenzstrahlen der Lichtkeule 81. Ein Teil des Nutzlichtes wird von der Blaulichtblende 93 abgeschnitten, weil sich vor dieser das Nutzlicht mit dem Fresnelreflex mischt, der durch Reflektion des Anregungslichtes auf der Konverteroberseite entsteht. Dieser Fresnelreflex wird von der Blaulichtblende 93 teilweise absorbiert und teilweise wieder reflektiert, um auf der Konverteroberfläche aufzutreffen und absorbiert zu werden.

Fig. 19 zeigt die Auskoppelscheibe 9 in Draufsicht. In Ausführungsformen des faseroptischen Konversionsmoduls mit Überprüfung der Unversehrtheit dieser Auskoppelscheibe 9 wird als Material der Auskoppelscheibe gehärtetes Glas bevorzugt. Auf das Glas wird beidseitig eine Anti-Reflektionsschicht aufgebracht und zusätzlich eine Leiterbahn 91, z.B. als gesputterte ITO-Schicht. Die Leiterbahn 91 verläuft parallel zu den Rändern der Auskoppelscheibe 9 und endet in zwei sich gegenüberstehenden Löt-Pads 92, die zum Anschluss von Prüfleitungen dienen.

Wenn bei einem Unfall der Autoscheinwerfer bricht, wird die gehärtete Auskoppelscheibe 9 insgesamt in kleine Brösel zerfallen, von denen zum Rande der Scheibe hin einige den Verbund mit der Scheibe verlassen, so dass die Leiterbahn 91 sicher unterbrochen wird. Dies kann von einer noch zu beschreibenden Überwachungsschaltung detektiert werden.

Fig. 20 zeigt eine Überwachungsschaltung gegenüber Faserbruch. Zu sehen sind die SMA-Stecker 5 und 57 der Lichtleitfasern 6 und 7, ferner die leitfähigen Beschichtungen 63 dieser Lichtleitfasern sowie der Auskoppelkopf 1 mit der Abdeckscheibe 9. Den Steckern 5 der Lichtleitfasern 6 ist jeweilig eine Laserdiode 60 zugeordnet, die das kurzwelligere Anregungslicht in die jeweilige Lichtleitfaser 6 einkoppelt. Der Lichtleitfaser 7 für optische Überwachung ist eine Photodiode 70 zugeordnet, die von dem Konverter abgegebenes Nutzlicht über die Lichtleitfaser 7 empfängt. Die elektrisch leitfähigen Beschichtungen 63 sind bei einem Knotenpunkt 67 elektrisch miteinander verbunden. Es gibt eine Stromzuführung 65 zu jedem der Stecker 5 über Vorwiderstände 64 und eine Rückleitung 66 über die leitfähige Beschichtung der Lichtleitfaser 7 und des zugehörigen Steckers. An jeden der Widerstände 64 fällt eine Spannung ab, solange Strom fließt. Bei Bruch einer Lichtleitfaser 6 fällt die Spannung am zugehörigen Widerstand 64 aus, was zur Bruchfeststellung der betreffenden Lichtleitfaser 6 nachweisbar ist. Die Nachweismittel sind Fachleuten gut bekannt und werden deshalb nicht dargestellt. Wenn eine der Lichtleitfasern 6 brechen sollte, wird der erzeugte Leuchtfleck auf dem Konverter dunkler werden, was durch die Photodiode 70 nachweisbar ist. Wenn ein solcher Bruch der betreffenden Lichtleitfaser 6 festgestellt wird, wird wenigstens die betreffende Laserdiode 60 ausgeschaltet. Dadurch werden zerstörerische Einwirkungen des energiereichen Laserlichts vermieden.

Fig. 21 zeigt die Schaltung der Fig. 20 mit einer Erweiterung der Überwachung der Abdeckscheibe 9. Die elektrische Rückleitung vom Knotenpunkt 67 führt über die Leiterbahn 91, so dass der Bruch der Abdeckscheibe 9 schlussendlich ebenfalls zur Abschaltung der Laserdioden 60 führt.

Zusammenfassend kann ausgeführt werden, dass bei der Erfindung kurzwelligeres Anregungslicht auf einen in Strahlrichtung schräg oder geneigt angeordneten Konverter 8 gerichtet wird, der in einem solchen Neigungswinkel zur Strahlrichtung steht, dass das im Mittel langwelligere Nutzlicht in einem Strahlwinkel emittiert wird, der im Wesentlichen außerhalb des Reflexionswinkels des Fresnelreflexes liegt, so dass dieser Fresnelreflex von einer Lichtblende 93 aufgefangen und unschädlich gemacht werden kann.

## Patentansprüche

1. Faseroptisches Konversionsmodul als Teil einer Beleuchtungseinrichtung, die einen Reflektor (17) aufweist und Nutzlicht gemischt aus kurzwelligerem Anregungslicht und langwelligerem Konversionslicht abgibt, umfassend:
- wenigstens eine Lichtleitfaser (6), die an einem Lichteintrittsende zur Ankopplung an eine zugeordnete Anregungslichtquelle (60) ausgebildet ist und an einem Lichtaustrittsende zur Abgabe von Anregungslicht in vorgegebener Strahlrichtung an einen Leuchtfleck (80) eingerichtet ist;
- einen Konverter (8), der geneigt zu der vorgegebenen Strahlrichtung angeordnet ist und zur Konversion des kurzwelligeren Anregungslichtes in das langwelligere Konversionslicht und Emission des gemischten Nutzlichtes dient, das von dem Leuchtfleck (80) ausgeht und sich in einen Bereich eines nutzbaren Abstrahlwinkels ausbreitet sowie auf den Reflektor (17) auftrifft, wobei ein Teil des Anregungslichtes am Konverter (8) in einen Bereich außerhalb des nutzbaren Abstrahlwinkels hinein reflektiert wird;
- einen Auskoppelkopf (1) zur Halterung des Lichtaustrittsendes der wenigstens einen Lichtleitfaser (6) und des Konverters (8);
- einen Kühlkörper (14) zur Aufnahme des Konverters (8) in wärmeleitender und mechanisch fester Verbindung mit dem Auskoppelkopf (1); und
- ein Nutzlichtaustrittsfenster, das mit einer Lichtblende (93) für am Konverter direkt reflektiertes Anregungslicht außerhalb des Bereichs des nutzbaren Abstrahlwinkels des Nutzlichtes versehen ist.

2. Faseroptisches Konversionsmodul nach Anspruch 1,
wobei das Nutzlichtaustrittsfenster durch eine Abdeckscheibe (9) des Auskoppelkopfes (1) gebildet wird, welche die Lichtblende (93) umfasst, die zusammen mit dem Konverter (8) eine Lichtfalle zum Auffangen des direkt reflektierten Anregungslichts bildet.

3. Faseroptisches Konversionsmodul nach Anspruch 1 oder 2, wobei zur optischen Überwachung des Konverters eine weitere Lichtleitfaser (7) vorgesehen ist, die nahe dem Lichtaustrittsende der wenigstens einen Lichtleitfaser (6) ein Lichteintrittsende und nahe dem Lichteintrittsende der wenigstens einen Lichtleitfaser ein Lichtaustrittsende aufweist, das mit einem Photodetektor (70) verbindbar ist.

4. Faseroptisches Konversionsmodul nach einem der Ansprüche 1 bis 3, wobei zwei oder mehrere Lichtleitfasern (6) in einem Verteilergehäuse (2) gehaltert werden und dabei wenigstens teilweise gekrümmt sind, um in gerader oder leicht gekrümmter Linie zu einer Lichtaustritts-Konzentrationsstelle (12) zu streben, von der aus das austretende Anregungslicht den Leuchtfleck (80) erreicht.

5. Faseroptisches Konversionsmodul nach einem der Ansprüche 1 bis 4,
wobei die wenigstens eine Lichtleitfaser (6) von wenigstens einem Schutzschlauch (41) und/oder einer Schutzschicht umgeben ist.

6. Faseroptisches Konversionsmodul nach Anspruch 5,
wobei der Schutzschlauch (41) zwei Abschnitte (41a, 41b) aufweist, die teleskopierend über- und ineinander greifen, um einen Längenausgleich zwischen Lichtleitfaser (6) und Schutzschlauch (41) zu bieten.

7. Faseroptisches Konversionsmodul nach einem der Ansprüche 4 bis 6,
wobei das Verteilergehäuse (2) einen sichelförmigen Innenraum (20) einschließt, in welchem die Lichtleitfasern (6) bogenförmig zwischen der Anregungslichtquelle (60) und einem Lichtleiter-Verbindungskabel (3) zu dem Auskoppelkopf (1) geführt sind.

8. Faseroptisches Konversionsmodul nach einem der Ansprüche 4 bis 6
wobei die Lichtleitfasern (6) zwischen Anregungslichtquelle (60) und Auskoppelkopf (1) bereichsweise einen helixförmigen Verlauf nehmen oder eine Schleife bilden.

9. Faseroptisches Konversionsmodul nach einem der Ansprüche 4 bis 8, wobei drei Lichtleitfasern (6) vorgesehen sind, die zwischen einem jeweilig zugehörigen Stecker (5) und dem Verteilergehäuse (2) einzeln von je einem metallischen Schutzschlauch (40) umgeben sind und die zwischen dem Verteilergehäuse (2) und dem Auskoppelkopf (1) in einem gemeinsamen metallischen Schutzschlauch (30) zusammengeführt sind.

10. Faseroptisches Konversionsmodul nach Anspruch 9 in Rückbezug auf Anspruch 3, wobei die weitere Lichtleitfaser (7) zwischen einem weiteren Stecker (57) und dem Verteilergehäuse (2) von einem weiteren metallischen Schutzschlauch (40) umgeben ist und zwischen Verteilergehäuse (2) und Auskoppelkopf (1) zusammen mit den Lichtleitfasern (6) in dem gemeinsamen metallischen Schutzschlauch (30) geführt ist.

11. Faseroptisches Konversionsmodul nach einem der Ansprüche 1 bis 10, wobei die wenigstens eine Lichtleitfaser (6) einen Faserkern (61) aus Quarzglas, einen Fasermantel (62) aus Quarzglas und einen Überzug (63) aufweist, der zwei Schichten aus unterschiedlichen Kunststoffen oder aus Kunststoff und Metall enthält.

12. Faseroptisches Konversionsmodul nach einem der Ansprüche 1 bis 11,
wobei die Lichtleitfaser (6) am Lichteintrittsende eine Endhülse (50) mit Steckerende (51) aufweist, die mit einem das Steckerende (51) umgebenden Crimpbereich (51a) und/oder mit einer die Stirnfläche der Endhülse (50) abdeckende Schutzblende (53) und/oder mit einem das Faserende am Steckerende umgebenden Keramik-Vergusskörper (54) versehen ist, oder die Lichtleitfaser (6) im Bereich der Endhülse (50) einen so dicken Fasermantel (62) aufweist, dass bei Dejustage des Steckers (5) gegenüber der Anregungslichtquelle (6) das Anregungslicht noch an der Endhülse-Stirnfläche gefahrlos aufgefangen wird.

13. Faseroptisches Konversionsmodul nach einem der Ansprüche 1 bis 12, wobei der Auskoppelkopf (1) ein Unterteil (10), ein Oberteil (11) und einen Einsatz (12) aufweist, der die Konverter-nahe Enden der Lichtleitfasern (6, 7) zur Bildung einer Lichtaustritt-Konzentrationsstelle (120) haltert, um das Anregungslicht an den Leuchtfleck (80) abzugeben.

14. Faseroptisches Konversionsmodul nach einem der Ansprüche 1 bis 13,
wobei der Kühlkörper (14) des Auskoppelkopfes (1) über einen Wärmeleitpfad (15) mit einer Wärmesenke verbunden ist.

15. Faseroptisches Konversionsmodul nach einem der Ansprüche 1 bis 14, wobei der Auskoppelkopf (1) an dem Lichtaustrittsende der Lichtleitfasern (6) eine Gehäusestufe (128) aufweist, der eine Schrägfläche des Kühlkörpers (14) gegenübersteht, auf welcher der Konverter (8) angebracht ist.

## Claims

1. A fiber-optic conversion module as part of a lighting device that comprises a reflector (17) and emits useful light mixed from shorter wavelength excitation light and longer wavelength converted light, comprising:
- at least one optical fiber (6) having a light input end adapted for being connected to an associated excitation light source (60), and a light exit end adapted for emitting excitation light to a light spot (80) in a predetermined beam direction;
- a converter (8) arranged at an angle relative to the predetermined beam direction and used for converting the shorter wavelength excitation light into the longer wavelength converted light and for emitting the mixed useful light emanating from said light spot (80) and spreading into a region of a useful radiation angle to impinge on the reflector (17), wherein part of the excitation light is reflected at the converter (8) into a region outside the useful radiation angle;
- a light exit head (1) for supporting the light exit end of the at least one optical fiber (6) and the converter (8);
- a cooling element (14) for accommodating the converter (8) in a heat conductive and mechanically stable assembly with the light exit head (1); and
- an exit window for useful light, which is provided with a light stop (93) for excitation light directly reflected at the converter outside the region of the useful radiation angle of the useful light

2. The fiber-optic conversion module according to claim 1, wherein the exit window for useful light is defined by a cover sheet (9) of the light exit head (1) comprising the light stop (93) which together with the converter (8) forms a light trap for collecting the directly reflected excitation light.

3. The fiber-optic conversion module according to claim 1 or 2, wherein a further optical fiber (7) is provided for optically monitoring the converter, which further optical fiber has a light input end near the light exit end of the at least one optical fiber (6) and a light exit end near the light input end of the at least one optical fiber, which light exit end is connectable to a photodetector (70).

4. The fiber-optic conversion module according to any one of claims 1 to 3, wherein two or more optical fibers (6) are supported in a distributor housing (2) in an at least partly curved manner to extend toward a light exit concentration point (12), along a rectilinear or slightly curved line, from which the exiting excitation light reaches the light spot (80).

5. The fiber-optic conversion module according to any one of claims 1 to 4, wherein the at least one optical fiber (6) is enclosed by at least one protective tube (41) and/or a protective layer.

6. The fiber-optic conversion module according to claim 5, wherein the protective tube (41) has two sections (41a, 41b) which are interengaged telescopically to provide for a compensation in length between the optical fiber (6) and the protective tube (41).

7. The fiber-optic conversion module according to any one of claims 4 to 6, wherein the distributor housing (2) encloses a crescent-shaped inner space (20) in which the optical fibers (6) extend in a curved manner between the excitation light source (60) and an optical fiber connecting cable (3) to the light exit head (1).

8. The fiber-optic conversion module according to any one of claims 4 to 6, wherein the optical fibers (6) partially extend in a helical manner or form a loop between the excitation light source (60) and the light exit head (1).

9. The fiber-optic conversion module according to any one of claims 4 to 8, wherein three optical fibers (6) are provided, each of which are individually surrounded by a respective metallic protective tube (40) between a respective associated connector (5) and the distributor housing (2), and which are combined in a shared metallic protective tube (30) between the distributor housing (2) and the light exit head (1).

10. The fiber-optic conversion module according to claim 9 and claim 3, wherein the further optical fiber (7) is surrounded by a further metallic protective tube (40) between a further connector (57) and the distributor housing (2) and extends through the shared metallic protective tube (30) together with the optical fibers (6) between the distributor housing (2) and the light exit head (1).

11. The fiber-optic conversion module according to any one of claims 1 to 10, wherein the at least one optical fiber (6) has a fiber core (61) made of fused silica, a fiber cladding (62) made of fused silica, and a coating (63) comprising two layers of different plastics or of plastics and metal.

12. The fiber-optic conversion module according to any one of claims 1 to 11, wherein, at the light input end, the optical fiber (6) has a ferrule (50) with a connecting end portion (51) which is provided with a crimping zone (51a) surrounding the connecting end portion (51) and/or with a protective cover (53) covering the end face of the ferrule (50) and/or with a ceramic encapsulating body (54) surrounding the fiber end at the connecting end portion; or wherein the optical fiber (6) has a fiber cladding (62) in the region of the ferrule (50), which is thick enough so that in the case of a misalignment of the connector (5) with respect to the excitation light source (6) the excitation light is still safely trapped on the ferrule end face.

13. The fiber-optic conversion module according to any one of claims 1 to 12, wherein the light exit head (1) comprises a lower part (10), an upper part (11), and an insert (12) which supports the ends of the optical fibers (6, 7) proximal to the converter so as to form a light exit concentration point (120) for emitting the excitation light to the light spot (80).

14. The fiber-optic conversion module according to any one of claims 1 to 13, wherein the cooling element (14) of the light exit head (1) is connected to a heat sink via a heat conduction path (15).

15. The fiber-optic conversion module according to any one of claims 1 to 14, wherein the light exit head (1) has a housing step (128) at the light exit end of the optical fibers (6) facing an inclined surface of the cooling element (14) on which the converter (8) is attached.

## Revendications

1. Module de conversion à fibres optiques, en tant que partie d'un dispositif d'éclairage qui présente un réflecteur (17) et émet de la lumière utile, mélangée à partir de lumière d'excitation de longueur d'onde plus courte et de lumière de conversion de longueur d'onde plus longue, comprenant :
- au moins une fibre optique (6) qui est conçue, à une extrémité d'entrée de lumière, en vue du couplage à une source de lumière d'excitation (60) associée, et à une extrémité de sortie de lumière, en vue de l'émission de lumière d'excitation, dans une direction de rayonnement prédéfinie, à destination d'un point lumineux (80) ;
- un convertisseur (8) qui est disposé en étant incliné par rapport à la direction de rayonnement prédéfinie et sert à la conversion de la lumière d'excitation de longueur onde plus courte en lumière de conversion de longueur d'onde plus longue et à l'émission de la lumière utile mélangée qui part du point lumineux (80) et se propage dans une zone d'un angle de rayonnement exploitable et tombe sur le réflecteur (17), une partie de la lumière d'excitation étant réfléchie sur le convertisseur (8), vers une zone située à l'extérieur de l'angle de rayonnement exploitable ;
- une tête de sortie (1) destinée au support de l'extrémité de sortie de lumière de la fibre optique (6), au nombre d'au moins une, et du convertisseur (8) ;
- un corps de refroidissement (14) destiné à recevoir le convertisseur (8) dans une liaison conductrice de chaleur et fixe, du point de vue mécanique, avec la tête de sortie (1) ; et
- une fenêtre de sortie de lumière utile qui est pourvue d'un écran (93) pour la lumière d'excitation réfléchie directement sur le convertisseur, à l'extérieur de la zone de l'angle de rayonnement exploitable de la lumière utile.

2. Module de conversion à fibres optiques selon la revendication 1, dans lequel la fenêtre de sortie de lumière utile est constituée d'une vitre de recouvrement (9) de la tête de sortie (1), qui comprend l'écran (93) lequel forme avec le convertisseur (8) un piège de lumière destiné à capter la lumière d'excitation directement réfléchie.

3. Module de conversion à fibres optiques selon la revendication 1 ou 2, dans lequel il est prévu, pour la surveillance optique du convertisseur, une fibre optique (7) supplémentaire qui présente une extrémité d'entrée de lumière à proximité de l'extrémité de sortie de lumière de la fibre optique (6), au nombre d'au moins une, et, à proximité de l'extrémité d'entrée de lumière de la fibre optique, au nombre d'au moins une, une extrémité de sortie de lumière qui peut être reliée à un photodétecteur (70).

4. Module de conversion à fibres optiques selon l'une des revendications 1 à 3, dans lequel deux ou plusieurs fibres optiques (6) sont fixées dans un boîtier de distribution (2), en étant incurvées au moins en partie, pour se diriger suivant une ligne droite ou légèrement incurvée vers un point de concentration de sortie de lumière (12) à partir duquel la lumière d'excitation sortante atteint le point lumineux (80).

5. Module de conversion à fibres optiques selon l'une des revendications 1 à 4, dans lequel la fibre optique (6), au nombre d'au moins une, est entourée par au moins un tuyau flexible de protection (41) et/ou une couche de protection.

6. Module de conversion à fibres optiques selon la revendication 5, dans lequel le tuyau flexible de protection (41) présente deux tronçons (41a, 41b) qui se recouvrent et s'emboîtent de façon télescopique l'un dans l'autre, afin de permettre une compensation de longueur entre la fibre optique (6) et le tuyau de protection (41).

7. Module de conversion à fibres optiques selon l'une des revendications 4 à 6, dans lequel le boîtier de distribution (2) entoure un espace intérieur (20) en forme de croissant dans lequel les fibres optiques (6) sont guidées sous forme d'arc entre la source de lumière d'excitation (60) et un câble de raccordement de fibre optique (3), vers la tête de sortie (1).

8. Module de conversion à fibres optiques selon l'une des revendications 4 à 6, dans lequel les fibres optiques (6) suivent dans certaines zones un tracé hélicoïdal ou forment une boucle, entre la source de lumière d'excitation (60) et la tête de sortie (1).

9. Module de conversion à fibres optiques selon l'une des revendications 4 à 8, dans lequel il est prévu trois fibres optiques (6) qui sont entourées chacune individuellement par un tuyau flexible de protection (41) métallique, entre un connecteur (5) respectivement associé et le boîtier de distribution (2), et qui sont rassemblées dans un tuyau flexible de protection (41) métallique commun, entre le boîtier de distribution (2) et la tête de sortie (1).

10. Module de conversion à fibres optiques selon la revendication 9, en référence à la revendication 3, dans lequel la fibre optique (7) supplémentaire est entourée d'un tuyau souple de protection (40) métallique supplémentaire, entre un connecteur (57) supplémentaire et le boîtier de distribution (2), et est guidée conjointement avec les fibres optiques (6) dans le tuyau de protection (30) métallique commun, entre le boîtier de distribution (2) et la tête de sortie (1).

11. Module de conversion à fibres optiques selon l'une des revendications 1 à 10, dans lequel la fibre optique (6), au nombre d'au moins une, présente un cœur de fibre (61) en verre de quartz, une gaine de fibre (62) en verre de quartz et un revêtement (63) qui comporte deux couches constituées de matières plastiques différentes ou de matière plastique et de métal.

12. Module de conversion à fibres optiques selon l'une des revendications 1 à 11, dans lequel la fibre optique (6) présente, à l'extrémité d'entrée de lumière, un manchon d'extrémité (50) qui est doté d'une extrémité de connecteur (51) et d'une zone de sertissage (51a), entourant l'extrémité de connecteur (51), et/ou d'un écran de protection (53), recouvrant la face frontale du manchon d'extrémité (50), et/ou d'un corps moulé en céramique (54) entourant l'extrémité de fibre à l'extrémité de connecteur, ou dans lequel la fibre optique (6) présente, dans la région du manchon d'extrémité (50), une gaine de fibre (62) qui est si épaisse qu'en cas de désalignement du connecteur (5) par rapport à la source de lumière d'excitation (6), la lumière d'excitation soit encore captée sans risques sur la face frontale du manchon d'extrémité.

13. Module de conversion à fibres optiques selon l'une des revendications 1 à 12, dans lequel la tête de sortie (1) présente une partie inférieure (10), une partie supérieure (11) et une garniture (12) qui maintient les extrémités des fibres optiques (6, 7) proches du convertisseur, pour former un point de concentration de sortie de lumière (120), aux fins d'envoyer la lumière d'excitation au point lumineux (80).

14. Module de conversion à fibres optiques selon l'une des revendications 1 à 13, dans lequel le corps de refroidissement (14) de la tête de sortie (1) est relié à un puits thermique par l'intermédiaire d'un chemin de conduction de chaleur (15)

15. Module de conversion à fibres optiques selon l'une des revendications 1 à 14, dans lequel la tête de sortie (1) présente, à l'extrémité de sortie de lumière des fibres optiques (6), un gradin de boîtier (128) situé en vis-à-vis d'un plan incliné du corps de refroidissement (14), sur lequel est fixé le convertisseur (8).
